# EUROPÄISCHE PATENTSCHRIFT

(11) **EP 0 299 105 B1**
(45) Veröffentlichungstag und Bekanntmachung des Hinweises auf die Patenterteilung: **29.09.1993**
(21) Anmeldenummer: 87110384.2
(22) Anmeldetag: 17.07.1987
(51) Int. Cl.: B01D 63/08, B01D 29/01, F16J 15/00

(54) **Druckfiltrationsgerät**
Pressure filter
Filtre sous pression

(43) Veröffentlichungstag der Anmeldung: 18.01.1989
(73) Patentinhaber: Amafilter Membrantechnik GmbH, D-30853 Langenhagen (DE)
(72) Erfinder: Jacob, Fred, D-3501 Fuldabrueck-Bergshausen (DE); Kohlheb, Robert, Dr., D-3000 Hannover 1 (DE)
(74) Vertreter: Koomen, M.J.I.

(56) Entgegenhaltungen:
- EP-B- 0 203 318
- DE-A- 3 200 443
- GB-A- 395 871
- US-A- 3 565 256

## Beschreibung

Die Erfindung betrifft ein Druckfiltrationsgerät mit einem hochdruckseitigen Anströmraum für ein unter Hochdruck aufgegebenes Zulauffluid, einem demgegenüber unter Niederdruck stehenden Filtratraum und einem dazwischen angeordneten, abgedichteten Flachfilterzuschnitt, aufgebaut aus
a) hochdruckseitig zumindest einer Hochdruckplatte mit einer Strömungsführungsplatte sowie Zulauf- und Konzentratablaufkanalstutzen und
b) niederdruckseitig zumindest einem mit einer peripher umlaufenden Siebfassung versehenen Stützsieb für den Flachfilterzuschnitt, einer Niederdruckplatte mit einem Filtratablaufkanal und einer Ringmutter mit Außengewinde zum axialen Spannen der Dichtelemente des Druckfiltrationsgerätes durch Einschrauben der Ringmutter in ein Gewinde an der Innenseite des Außenmantels des Druckfiltrationsgerätes.

Druckfiltrationsgeräte erlauben es, beispielsweise Suspensionen durch beliebig nach Material wählbare Filterzuschnitte zu filtrieren oder im Verfahren der Umkehrosmose molekular gelöste Stoffe aus Lösungen an- bzw. abzureichern oder durch geeignete Membranen Gase voneinander zu separieren.

Handelsübliche Druckfiltrationsgeräte, die in der Regel im wesentlichen aus einer Hochdruckplatte mit Fluidzulauf und Konzentratablauf, einer Filterunterstützung, einer Niederdruckplatte mit Filtratablauf und zwei O-Ringen zur Abdichtung des Flachfilterzuschnitts bestehen, erlauben die Beaufschlagung mit hohen Drücken.

Beim Arbeiten im höheren Druckbereich ist allerdings bei den bisher üblichen Dichtungen aus nur einem O-Ring zwischen der Hochdruckplatte und dem Flachfilterzuschnitt eine merkliche Leckrate - vor allem bei niederviskosen Fluiden - zu registrieren. Bei Fluiden mit hochwertigen und/oder toxischen Inhaltsstoffen können merkliche Leckagen im allgemeinen nicht akzeptiert werden. Die dadurch erzwungene Absenkung des Drukkes führt dann in der Regel zu einer drastischen Absenkung der Separationsgeschwindigkeit.

Ein gattungsgemäßes Druckfiltrationsgerät ist beispielsweise auch in der EP-B1-0 203 318 beschrieben, das dort als Trennzelle bezeichnet wird. Auch diese bekannte Trennzelle besitzt eine Strömungsführungsplatte, die zur Hochdruckseite sowie zur Niederdruckseite hin abgedichtet ist, wobei hinsichtlich der Abdichtungen die oben geschilderten Probleme auftreten können.

Aufgabe der vorliegenden Erfindung ist es, ein gattungsgemäßes Druckfiltrationsgerät bereitzustellen, die mit einer mehrteiligen Dichtung für Flachfilterzuschnitte in derartigen Druckfiltrationsgeräten ausgestattet ist, so daß selbst bei hohen Drücken nur vernachlässigbare Leckraten für alle Komponenten der zu separierenden Fluide auftreten.

Gelöst wird diese Aufgabe durch ein Druckfiltrationsgerät, das dadurch gekennzeichnet ist, daß das Druckfiltrationsgerät einen die Siebfassung und den Flachfilterzuschnitt umfassenden, diese axial in beide Richtungen überragenden Führungsring besitzt, der hochdruckseitig mit einer radial nach innen weisenden Vorkragung und axial zur Hochdruckseite weisenden Vorkragung ausgestattet ist und in axialer Richtung beweglich ist,
daß die radiale Vorkragung des Führungsringes eine dem Flachfilterzuschnitt zugewandte Fläche besitzt, in der eine axial zum Flachfilterzuschnitt offene Nut verläuft, die zur Aufnahme eines Hochdruckdichtringes dient, der den Flachfilterzuschnitt gegenüber dem Führungsring abdichtet,
daß die radial nach innen weisenden Vorkragung und die axial zur Hochdruckseite weisende Vorkragung eine vom Zulauffluid druckbeaufschlagte Wirkfläche besitzen, wobei die Wirkfläche der radial nach innen weisenden Vorkragung kleiner ist als die Wirkfläche der axial zur Hochdruckseite weisenden Vorkragung, und
daß der Führungsring radial außen an seiner axial zur Hochdruckseite weisenden Vorkragung mit einem Hochdruckdichtring gegenüber der Hochdruckplatte abgedichtet ist.

Das erfindungsgemäße Druckfiltrationsgerät besitzt somit einen axial beweglichen Führungsring, der sich konzentrisch zum Flachfilterzuschnitt und zum Stützsieb zwischen diesem und dem Außenmantel des Druckfiltrationsgerätes befindet. Zwischen diesem Führungsring und dem Flachfilterzuschnitt ist hochdruckseitig mindestens eine Hochdruckdichtung vorgesehen. Zwischen dem Führungsring und der Hochdruckplatte ist ebenfalls mindestens eine Hochdruckdichtung vorgesehen. Für diese Hochdruckdichtungen sind in axialen und radialen Vorkragungen des Führungsringes Aussparungen angebracht. Das mit Druck beaufschlagte Zulauffluid kann über einen Spalt zwischen dem Flachfilterzuschnitt und der Strömungsführungsplatte sowie über einen Spalt zwischen dem Außenrand der Strömungsführungsplatte und dem Innenrand des Führungsringes bis zu diesen Hochdruckdichtungen gelangen.

Um bei Druckbeaufschlagung des Druckfiltrationsgeräts die axiale Verschiebung des Führungsrings zur Niederdruckseite hin, die für die erfindungsgemäße Dichtung von entscheidender Bedeutung ist, zu erreichen, muß die zur Hochdruckplatte weisende Wirkungsfläche des Führungsrings größer sein als die zum Flachfilterzuschnitt weisende. Nur so kann bei der Vektoraddition der auf den Führungsring bei Druckbeaufschlagung axial einwirkenden Kräfte eine axial zur Niederdruckseite hin weisende Kraft resultieren. Das heißt mit anderen Worten, die hochdruckseitig radial nach innen weisende Vorkragung muß eine kleinere Wirkfläche zum Flachfilterzuschnitt aufweisen als die radial innenliegende, axial zur Hochdruckplatte weisende Vorkragung des Führungsrings zur Hochdruckplatte hin.

Bei der resultierenden axialen Verschiebung des Führungsrings entlang der axial nach der Niederdruckseite hin weisenden peripheren Vorkragung der Hochdruckplatte wird dieser vorzugsweise entlang seiner radial nach außen weisenden Begrenzungsfläche einer axialen, nach der Hochdruckseite hin weisenden Vorkragung geführt.

Der Hubweg dieser axialen Verschiebung ist unter anderem begrenzt durch die Deformierbarkeit der Hochdruckdichtungen in den Nuten des Führungsrings an der Kontaktfläche zwischen diesem und dem Flachfilterzuschnitt bzw. zwischen dem Führungsring und der Hochdruckplatte. Beim axialen Verschieben dieses Führungsrings werden also die beiden oben erwähnten Hochdruckdichtungen verformt, was zwangsläufig eine Erhöhung ihrer Kontaktflächen mit den jeweilig abzudichtenden Teilen und ein optimales Anpassen an die jeweiligen Mikrounebenheiten der kontaktierten Oberflächen bewirkt.

Als Vorteile dieser mit ansteigendem Betriebsdruck des Druckfiltrationsgeräts sich steigernden Abdichtungswirkung der erfindungsgemäßen Dichtung sind zu erwähnen:
- Ohne allzu starkes Anziehen der zum druckfesten Verschließen des Druckfiltrationsgehäuses dienenden Sicherungselemente sind niedrige Leckraten bis in den 100 MPa-Bereich hinein zu erzielen.
- Das Verschließen des Druckfiltrationsgerätes ist bei einem entsprechend gestalteten Verschlußelement auch leicht per Hand möglich.
- Das Öffnen ist auch nach längerer Einsatzdauer mühelos möglich, da das Festsetzen der Verschlußelemente konstruktionsbedingt vermieden wird.
- Es wird nur ein einziges Verschlußelement benötigt, was eine erhebliche Zeitersparnis beim Verschließen und Öffnen des Druckfiltrationsgeräts bedeutet.
- Die gleichmäßige und schonende Druckbeaufschlagung des Flachfilterzuschnitts bewirkt eine Minimierung des Knautschens und des Kaltflusses desselben, was zu einer erhöhten Standzeit des Filterzuschnitts führt.

Im folgenden wird die Erfindung anhand einer Zeichnung, die lediglich eine Ausführung darstellt, näher erläutert.

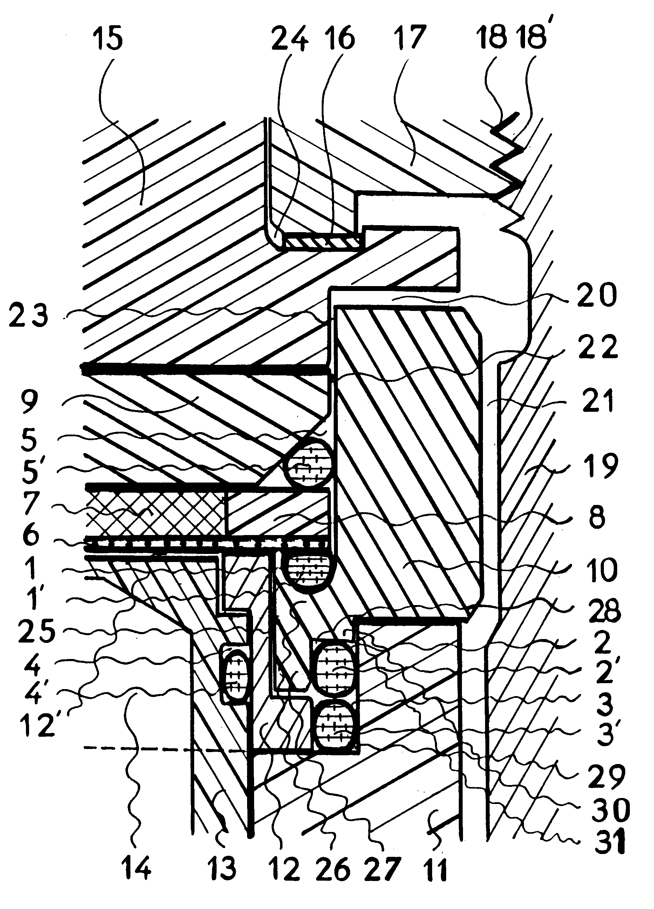

Es zeigt
die einzige Figur im Axialschnitt einen peripheren Abschnitt des erfindungsgemäßen Druckfitrationsgerätes mit einer Dichtung zum Abdichten des Flachfilterzuschnitts.

Im Außenmantel 19 des Druckfiltrationsgeräts mit einem hochdruckseitigen Anströmraum für ein unter Hochdruck aufgegebenes Zulauffluid und einem demgegenüber unter Niederdruck stehenden Filtratraum befindet sich im wesentlichen hochdruckseitig eine Hochdruckplatte 11 mit einer Strömungsführungsplatte 12 sowie Zulauf- und Konzentratablaufkanalstutzen 13. (In der Zeichnung ist nur die radial äußere Wand des Zulaufkanalstutzens 13 gezeigt.)

Niederdruckseitig folgt ein Stützsieb 7 für den Flachfilterzuschnitt 6 mit einer peripher umlaufenden Siebfassung 8 und einer Niederdruckplatte 15 mit einem Filtratablaufkanal. Eine Ringmutter 17 mit Außengewinde 18 dient zum axialen Spannen der Dichtelemente des Druckfiltrationsgerätes durch Einschrauben der Ringmutter 17 in ein Gewinde 18' an der Innenseite des Außenmantels 19 des Druckfiltrationsgeräts.

Das Zulaufkanalstutzen 13 dient dem Aufbringen des zu separierenden Fluids via dem Strömungskanal (14) in der Strömungsführungsplatte 12 auf den Flachfilterzuschnitt 6. Dementsprechend besorgt das Konzentratablaufkanalstutzen (nicht gezeigt) das Abführen des Konzentrats aus dem Druckfiltrationsgerät.

Das fluiddurchlässige Stützsieb 7 dient als mechanische Verstärkung der in der Regel relativ dünnen Flachfilterzuschnitte 6 und ist vor allem bei Beaufschlagung mit höheren Drücken unabdingbar. Es ist mit einer peripher umlaufenden, fluidundurchlässigen Siebfassung 8 eingefaßt.

In einer vorzugsweisen Ausgestaltung befindet sich eine der gleichmäßigen Druckverteilung auf den Flachfilterzuschnitt 6 dienende Stützscheibe 9 zwischen dem Stützsieb 7 und der Niederdruckplatte 15.

Diese Niederdruckplatte 15 weist an ihrer radialen Peripherie zwei stufenförmige Aussparungen auf. In der axial zur Niederdruckseite offenen Aussparung 24 ist unverlierbar eine Gleitringscheibe 16 aus einem Polymer mit niedriger Oberflächenspannung angebracht, die als Gleitlager für die Ringmutter 17 beim Verschließen des Druckfiltrationsgeräts dient.

Eine axial zur Hochdruckseite und radial nach außen offene Aussparung 23 in der Niederdruckplatte 15 dient sowohl als Gleitfläche als auch als Anschlag Hubbegrenzung für einen Führungsring 10.

Dieser Führungsring 10 kann sich bei Druckbeaufschlagung im Außenmantel 19 des Druckfiltrationsgeräts zur Niederdruckseite hin axial bewegen. Er umfaßt den Flachfilterzuschnitt 6 und die Stützsiebfassung 8 konzentrisch und überragt diese axial in beide Richtungen.

Er umgreift hochdruckseitig den Flachfilterzuschnitt 6 mit einer beim bestimmungsgemäßen Einsatz radial nach innen weisenden Vorkragung 26 und einer axial zur Hochdruckseite weisenden Vorkragung 27. Der Führungsring 10 bildet mit der radial nach innen weisenden Begrenzungsfläche seiner axialen Vorkragung 27 einen Verbindungskanal 25 mit der radial außen liegenden Begrenzungsfläche der Strömungsführungsplatte 12. Dieser Verbindungskanal 25 ist in einer vorzugsweisen Ausgestaltung als Ringspalt ausgeführt und steht via hochdruckseitigem Anströmraum 12' mit dem Hochdruckfluid in Verbindung.

Die radial nach innen weisende Vorkragung 26 des Führungsrings 10 besitzt eine zum Flachfilterzuschnitt 6 offene Nut 1 zur Aufnahme eines Hochdruckdichtrings 1'. Dieser Hochdruckdichtring 1' dient der Abdichtung des Flachfilterzuschnitts 6 gegenüber dem Führungsring 10. Dieser zeichnet sich weiterhin durch eine radial nach außen und axial zur Hochdruckseite hin offene, ringfalzartige Aussparung 28 an der axial zur Hochdruckseite weisenden Vorkragung 27 aus. Durch diese Aussparung 28 wird zusammen mit einer in der Hochdruckplatte 11 radial nach innen und axial zur Niederdruckseite hin offenen Aussparung 29, deren Durchmesser etwa der Differenz aus dem Außendurchmesser des Führungsrings 10 und der halben Breite desselben entspricht, eine zur Hochdruckseite hin offene U-förmige Ringnut 2 gebildet, die zur Aufnahme eines Hochdruckdichtrings 2' dient. Dieser Hochdruckdichtring 2' dient der Abdichtung der Trennfuge zwischen dem Führungsring 10 und der Hochdruckplatte 11.

Zur Gewährleistung der axialen Verschiebung des Führungsrings 10 hin zur Niederdruckseite muß die Aussparung 29 der Hochdruckplatte 11 einen größeren Durchmesser aufweisen als der Flachfilterzuschnitt 6 bzw. die hochdruckseitig radial nach innen weisende Vorkragung 26 muß eine kleinere Wirkfläche zum Flachfilterzuschnitt 6 aufweisen als die radial innen liegende, axial zur Hochdruckplatte weisende Vorkragung 27 des Führungsrings 10 zur Hochdruckplatte 11 hin.

Die exakte axiale Hubbewegung des Führungsrings 10 entlang der radial nach innen weisenden Seitenwand 31 der Hochdruckplatte 11 wird durch eine axial zur Hochdruckseite weisende Vorkragung 30 des Führungsring 10 gewährleistet.

Ist der radial außen liegende Rand der Strömungsführungsplatte 12 so gestaltet, daß er an der radial innen liegenden Begrenzungsfläche der Aussparung 29 der Hochdruckplatte 11 anstößt, so übernimmt die Hochdruckdichtung 2' auch die Abdichtung des Spaltes 25 zwischen Strömungsführungsplatte 12 und Hochdruckplatte 11.

Bei einer wahlweisen Ausgestaltung des erfindungsgemäßen Druckfiltrationsgerätes sind die beiden oben genannten Dichtfunktionen getrennt.

Ein weiterer Hochdruckdichtring 3' in einer Nut 3, gebildet durch die radial nach innen weisende Seitenwand 31 der Aussparung 29 der Hochdruckplatte 11 und der radial nach außen weisenden Begrenzungsfläche der Strömungsführungsplatte 12, übernimmt die Abdichtung der als separates Bauteil ausgeführten Strömungsführungsplatte 12 gegenüber der Hochdruckplatte 11.

Eine weitere alternative Ausgestaltung des erfindungsgemäßen Druckfiltationgerätes ist gekennzeichnet durch Zulauf- und Konzentratablaufstutzen 13 als separat in die Hochdruckplatte 11 eingesetzte Bauteile, die durch jeweils einen Hochdruckdichtring 4' in je einer an deren Seitenflanke radial umlaufenden Nut 4 gegenüber der Strömungsführungsplatte 12 abgedichtet werden.

Die niederdruckseitige Abdichtung des Flachfilterzuschnitts 6 und der Stützsiebfassung 8 zum Außenmantel 19 hin besorgt ein auf der Stützsiebfassung 8 aufliegender Niederdruckdichtring 5' in der beispielsweise als periphere Abschrägung der Stützscheibe 9 ausgeführten Nut 5.

Um die axiale Verschiebung bei Druckbeaufschlagung des Druckfiltrationsgeräts zu erleichtern, ein Festsitzen der gleitenden Flächen zu vermeiden und die Korrosionsbeständigkeit zu erhöhen, ist vorzugsweise zumindest der Führungsring 10 an der Oberfläche mit einem Polymer mit niedriger Oberflächenspannung, insbesondere mit Polytetrafluorethen, beschichtet.

Wahlweise sind alle mit dem Führungsring 10 in Kontakt kommenden Flächen ebenfalls insbesondere mit diesem Polymer beschichtet bzw. die entsprechenden Teile aus diesem Kunststoff gefertigt.

Bei der unter Druckbeaufschlagung erfolgenden axialen Verschiebung des Führungsrings 10 wird der Hochdruckdichtring 1' aufgrund der axialen Begrenzung durch den Flachfilterzuschnitt 6 axial gestaucht und zugleich radial gelängt, während die Hochdruckdichtringe 2',3', 4' und die Niederdruckdichtung 5' axial gelängt werden.

Dementsprechend weist die Nut 1 in radialer Richtung eine lichte Weite etwas größer als die Schnurstärke der vorzugsweise als Rundschnurdichtung ausgeführten Hochdruckdichtung 1' auf.

Analog sind die Nuten 2,3,4 und 5 mit einer axialen Tiefe versehen, die etwas größer als die Schnurstärke der ebenfalls vorzugsweise als Rundschnurdichtungen ausgeführten Hochdruckdichtungen 2',3' und 4' bzw. der Niederdruckdichtung 5'.

Als Materialien für die Dichtungen 1' bis 5' werden vorzugsweise aufgrund ihrer hohen chemischen Beständigkeit, Hochtemperaturfestigkeit sowie ihres niedrigen Druckverformungsrestes Fluorpolymere, beispielsweise Polytetrafluorethen, und/oder Fluorkautschuke auf Basis der Co- bzw. Ter-Polymere von Perfluoralkenen (FPM, z.B. Viton®) - insbesondere mit PTFE umhüllt - bzw. der Copolymere von Perfluoralkenen und Trifluormethoxy-perfluoralkenen (z.B. Kalrez®) eingesetzt.

Bei Beaufschlagung mit höheren Drücken und Temperaturen und/oder bei größeren Dimensionen des Druckfiltrationsgeräts sind kohlenstoffaserverstärkte Dichtungen aus den oben genannten Materialien aufgrund ihrer höheren Spalt-Extrusionsbeständigkeit vorzuziehen.

Die Strömungsführungsplatte 12 ist insbesondere aus einem Fluorpolymer (wie z.B. Polyvinylidendifluorid oder Polytetrafluorethen) gefertigt.

Die übrigen Bestandteile des Druckfiltrationsgeräts bestehen aus hochlegierten Stählen.

## Patentansprüche

1. Druckfiltrationsgerät mit einem hochdruckseitigen Anströmraum für ein unter Hochdruck aufgegebenes Zulauffluid, einem demgegenüber unter Niederdruck stehenden Filtratraum und einem dazwischen angeordneten, abgedichteten Flachfilterzuschnitt (6), aufgebaut aus
a) hochdruckseitig zumindest einer Hochdruckplatte (11) mit einer Strömungsführungsplatte (12) sowie Zulauf- und Konzentratablaufkanalstutzen (13) und
b) niederdruckseitig zumindest einem mit einer peripher umlaufenden Siebfassung (8) versehenen Stützsieb (7) für den Flachfilterzuschnitt (6), einer Niederdruckplatte (15) mit einem Filtratablaufkanal und einer Ringmutter (17) mit Außengewinde (18) zum axialen Spannen der Dichtelemente des Druckfiltrationsgerätes durch Einschrauben der Ringmutter (17) in ein Gewinde (18') an der Innenseite des Außenmantels (19) des Druckfiltrationsgerätes,
dadurch **gekennzeichnet,**
daß das Druckfiltrationsgerät einen die Siebfassung (8) und den Flachfilterzuschnitt (6) umfassenden, diese axial in beide Richtungen überragenden Führungsring (10) besitzt, der hochdruckseitig mit einer radial nach innen weisenden Vorkragung (26) und axial zur Hochdruckseite weisenden Vorkragung (27) ausgestattet ist und in axialer Richtung beweglich ist,
daß die radiale Vorkragung (26) des Führungsringes (10) eine dem Flachfilterzuschnitt (6) zugewandte Fläche besitzt, in der eine axial zum Flachfilterzuschnitt (6) offene Nut (1) verläuft, die zur Aufnahme eines Hochdruckdichtringes (1') dient, der den Flachfilterzuschnitt (6) gegenüber dem Führungsring (10) abdichtet,
daß die radial nach innen weisenden Vorkragung (26) und die axial zur Hochdruckseite weisende Vorkragung (27) eine vom Zulauffluid druckbeaufschlagte Wirkfläche besitzen, wobei die Wirkfläche der radial nach innen weisenden Vorkragung (26) kleiner ist als die Wirkfläche der axial zur Hochdruckseite weisenden Vorkragung (27), und
daß der Führungsring (10) radial außen an seiner axial zur Hochdruckseite weisenden Vorkragung (27) mit einem Hochdruckdichtring (2') gegenüber der Hochdruckplatte (11) abgedichtet ist.

2. Druckfiltrationsgerät nach Anspruch 1,
**gekennzeichnet** durch
einen vom hochdruckseitigen Anströmraum (12') zum Hochdruckdichtring (2') führenden Verbindungskanal (25).

3. Druckfiltrationsgerät nach Anspruch 2,
dadurch **gekennzeichnet,**
daß der Verbindungskanal (25) zwischen der radial nach außen zeigenden Begrenzungsfläche der Strömungsführungsplatte (12) und der radial nach innen weisenden Vorkragung (26) des Führungsringes (10) in Form eines Ringspaltes verläuft.

4. Druckfiltrationsgerät nach einem der vorhergehenden Ansprüche,
dadurch **gekennzeichnet,**
daß die Hochdruckplatte (11) eine radial nach innen und axial zur Niederdruckseite hin offene Aussparung (29) besitzt und
daß die axial zur Hochdruckseite weisende Vorkragung (27) mit einer radial nach außen sowie axial zur Hochdruckseite hin offenen, ringfalzartigen Aussparung (28) ausgestattet ist, die zusammen mit der radial nach innen zeigenden Seitenwand (31) der Aussparung (29) in der Hochdruckplatte (11) eine zur Hochdruckseite hin offene U-förmige Ringnut (2) zur Aufnahme des Hochdruckdichtringes (2') bildet.

5. Druckfiltrationsgerät nach Anspruch 4,
dadurch **gekennzeichnet,**
daß die Strömungsführungsplatte (12) ein separates Bauteil darstellt, das in die radial nach innen und axial zur Niederdruckseite hin offene Aussparung (29) der Hochdruckplatte (11) eingelegt ist, und durch einen Hochdruckdichtring (3') in einer Nut (3) zwischen dem radial nach außen zeigenden Rand der Strömungsführungsplatte (12) und der radial nach innen und axial zur Niederdruckseite hin offenen Aussparung (29) der Hochdruckplatte (11) abgedichtet ist.

6. Druckfiltrationsgerät nach Anspruch 4 oder 5,
dadurch **gekennzeichnet,**
daß der Führungsring (10) mittels einer Vorkragung (30) an der Seitenwand (31) der Aussparung (29) axial geführt ist.

7. Druckfiltrationsgerät nach einem der vorhergehenden Ansprüche,
**gekennzeichnet** durch
eine Stützscheibe (9) zwischen dem Stützsieb (7) und der Niederdruckplatte (15) zum Abstützten des Stützsiebes (7) und eine Gleitringscheibe (16) zwischen der Niederdruckplatte (15) und der Ringmutter (17).

8. Druckfiltrationsgerät nach einem der vorhergehenden Ansprüche,
**gekennzeichnet** durch
mindestens einen Niederdruckdichtring (5') zwischen der Siebfassung (5') sowie gegebenenfalls der Stützscheibe (9) und dem Führungsring (10).

9. Druckfiltrationsgerät nach einem der vorhergehenden Ansprüche,
dadurch **gekennzeichnet,**
daß die Zulauf- und Konzentratablaufstutzen (13) separat in die Hochdruckplatte (11) eingesetzte Bauteile sind, die durch mindestens jeweils einen Hochdruckdichtring (4') in mindestens je einer an deren Seitenflanke radial umlaufenden Nut (4) gegenüber der Strömungsführungsplatte (12) abgedichtet sind.

10. Druckfiltrationsgerät nach einem der vorhergehenden Ansprüche,
dadurch **gekennzeichnet,**
daß die Dichtringe (1',2',3',4' und 5') Rundschnurdichtungen aus Fluorkohlenwasserstoffpolymeren sind.

## Claims

1. A press filter device having on the high-pressure side an inlet chamber for an inflow fluid delivered under high pressure, an oppositely disposed filtering chamber subjected to low pressure and a sealed off, flat filter member (6) disposed therebetween and comprising
a) on the high-pressure side at least one high pressure plate (11) provided with a flow guide plate (12) as well as inflow and concentrate discharge channel sockets (13) and
b) on the low-pressure side at least one support sieve (7) provided with a peripherally extending sieve fitting (8) for the flat filter member (6), a low-pressure plate (15) provided with a filtrate discharge channel and a collar nut (17) with an outer thread (18) for axial tautening of the sealing elements of the press filter device by screwing the collar nut (17) into an inner thread (18') on the inside of the outer sleeve (19) of the press filter device,
**characterized** in that,
the press filter device is provided with a guide ring (10) which embraces the sieve fitting (8) and the flat filter member (6) and projects past both of them in opposite axial directions, the ring being provided on the high-pressure side with a radially inwardly directed projection (26) and an axial projection (27) directed towards the high-pressure side, said ring being movable in axial direction,
that the radial projection of the guide ring (10) is provided with a surface which faces the flat filter member (6) and in which extends a groove (1) open towards the flat filter member (6) and serving to receive a high-pressure sealing ring (1'), which seals off the flat filter member (6) with respect to the guide ring (10),
that the radially inwardly directed projection (26) and the axial projection (27) which is directed towards the high-pressure side is provided each with an active surface which is acted upon by the pressure of the inflow fluid, whereby the active surface of the radially inwardly directed projection (26) is smaller than the active surface of the axial projection (27) which is directed towards the high-pressure side, and
that the guide ring (10) is sealed off radially outwardly on its axial projection (27), which is directed towards the high-pressure side, with respect to the high pressure plate (11) by means of a high-pressure sealing ring (2').

2. A press filter device according to claim 1,
**characterized** by
an interconnecting channel (25), which leads from the inlet chamber (12') disposed on the high-pressure side to the high-pressure sealing ring (2').

3. A press filter device according to claim 2,
**characterized** in that,
the interconnecting channel (25) extends in the form of an annular gap between the radially outwardly directed boundary surface of the flow guide plate (12) and the radially inwardly directed projection (26) of the guide ring (10).

4. A press filter device according to one of the preceding claims,
**characterized** in that,
the high-pressure plate (11) is provided with a groove (29) which is open radially inwardly and axially towards the low-pressure side and
that axial projection (27) which points towards the high-pressure side is provided with a rebated groove (28) which is open radially outwardly and axially towards the high-pressure side, which jointly with the radially inwardly directed side wall (31) of the groove (29) in the high-pressure piate (11) form a U-shaped annular groove (2), open towards the high-pressure side, for the reception of the high-pressure sealing ring (2').

5. A press filter device according to claim 4,
**characterized** in that,
the flow guide plate (12) constitutes a separate constructional element, which is inserted in the groove (29) of the high-pressure plate (11) and open radially inwardly and axially towards the low-pressure side, said guide plate being sealed off by a high-pressure sealing ring (3') in a groove (3) between the radially outwrdly directed edge of the flow guide plate (12) and the groove (29) in the high-pressure plate (11) and open radially inwardly and axially towards the low-pressure side.

6. A press filter device according to claim 4 or 5,
**characterized** in that
the guide ring (10) is guided axially along the side wall (31) by means of the projection (29).

7. A press filter device according to one of the preceding claims,
**characterized** by
a support washer (9) between the support sieve (7) and the low-pressure plate (15) for supporting of the support sieve (7) and a slide washer (16) between the low-pressure plate (15) and the collar nut (17).

8. A press filter device according to one of the preceding claims,
**characterized** by,
at least one low-pressure sealing ring (5') between the sieve fitting (8), as well if present, the support washer (9) and the guide ring (10).

9. A press filter device according to one of the preceding claims,
**characterized** in that,
the inflow and concentrate discharge channel sockets (13) constitute constructional components which are inserted separately into the high-pressure plate (11) and sealed off with respect to the flow guide plate (12) by at least one respective high-pressure sealing ring (4') in at least one respective circular groove (4) on the end side flank thereof.

10. A press filter device according to one of the preceding claims,
**characterized** in that,
the sealing rings (1',2',3',4' and 5') are circular rope seals made from fluorhydrocarbon polymers.

## Revendications

1. Filtre sous pression comportant d'un côté une chambre d'entrée pour un fluide arrivant sous haute pression, une chambre à basse pression disposée du côté opposé pour le filtrat et entre les deux une galette plate de filtrage (6) montée de manière étanche et constituée par:
a) du côté de la haute pression, au moins une plaque à haute pression (11) pourvue d'une plaque de guidage de l'écoulement (12) ainsi que de manchons (13) d'entrée et de sortie du produit concentré, et
b) du côté de la basse pression, au moins un tamis de soutien (7) pourvu d'une monture périphérique (8), pour la galette de filtrage (6), une plaque de basse pression (15) pourvue d'un canal de sortie pour le filtrat et associée à une bague filetée (17) à filetage externe (18) pour permettre le serrage axial des éléments d'étanchéité du filtre sous pression par vissage de la bague filetée (17) dans un filetage (18') prévu sur la face interne de l'enveloppe (19) du filtre sous pression,
caractérisé en ce que le filtre sous pression comporte une bague de guidage (10) qui entoure la monture (8) du tamis et la galette plate de filtrage (6), en débordant axialement au-delà de ces deux parties dans les deux sens, cette bague de guidage (10) étant pourvue du côté de la haute pression d'une collerette (26) en saillie radiale vers l'intérieur et d'une autre collerette (27) en saillie axiale du côté de la haute pression, cette bague de guidage (10) étant en outre mobile dans le sens axial, en ce que la collerette radiale (26) de la bague de guidage (10) présente du côté de la galette de filtrage (6) une face dans laquelle est ménagée une gorge (1) ouverte dans le sens axial en regard de la galette de filtrage (6) pour recevoir un joint annulaire à haute pression (1') qui assure l'étanchéité du montage de la galette de filtrage (6) par rapport à la bague de guidage (10), en ce que la collerette (26) en saillie radiale vers l'intérieur et la collerette d'entrée (27) en saillie axiale du côté de la haute pression présentent chacune une surface efficace sollicitée par la pression du fluide qui entre dans le filtre, la surface efficace de la collerette (26) en sailie radiale vers l'intérieur étant plus fabile que la surface efficace de la collerette d'entrée (27) en saillie axiale du côté de la haute pression et en ce que la bague de guidage (10) est pourvue radialement et à l'extérieur, à l'endroit de sa collerette d'entrée (27) en saillie axiale du côté de la haute pression, d'un joint annulaire à haute pression (2') qui assure son montage étanche par rapport à la plaque à haute pression (11).

2. Filtre sous pression selon la revendication 1, caractérisé en ce qu'il comporte un canal de liaison (25) allant de la chambre d'entrée à haute pression (12') au joint annulaire à haute pression (2').

3. Filtre sous pression selon la revendication 2, caractérisé en ce que le canal de liaison (25), prévu entre la face de la plaque de guidage de l'écoulement (12) en regard vers l'extérieur dans le sens radial et la collerette (26) de la bague de guidage (10) en saillie vers l'intérieur dans le sens radial, est constitué par un interstice annulaire.

4. Filtre sous pression selon l'une des revendications 1 à 3, caractérisé en ce que la plaque à haute pression (11) présente un évidement (29) ouvert dans le sens radial vers l'intérieur et ouvert du côté de la basse pression dans le sens axial, et en ce que la collerette d'entrée (27), en saillie axiale du côté de la haute pression, présente un évidement en forme de gorge annulaire (28) ouverte radialement vers l'extérieur et axialement du côté de la haute pression, qui coopère avec la face latérale (31) de l'évidement (29) de la plaque à haute pression (11) en regard vers l'intérieur dans le sens radial, pour constituer une gorge annulaire (2) ayant le profil d'un U ouvert du côté de la haute pression, pour recevoir le joint à haute pression (2').

5. Filtre sous pression selon la revendication 4, caractérisé en ce que la plaque de guidage de l'écoulement (12) constitue un élément séparé qui est logé dans l'évidement (29) de la plaque à haute pression (11), ouvert radialement vers l'intérieur et axialement du côté de la basse pression, le montage étanche de cet élément séparé (12) étant assuré par un joint à haute pression (3') logé dans une gorge (3) ménagée entre le bord de la plaque de guidage de l'écoulement (12) en regard vers l'extérieur dans le sens radial, et l'évidement (29) de la plaque à haute pression (11) qui est ouvert radialement vers l'intérieur et axialement du côté de la basse pression.

6. Filtre sous pression selon la revendication 4 ou 5, caractérisé en ce que la bague de guidage (10) est guidée dans le sens axial par une collerette (30) prévue sur la face latérale (31) de l'évidement (29).

7. Filtre sous pression selon l'une des revendications 1 à 6, caractérisé en ce qu'il comporte un disque de soutien (9) disposé entre le tamis de soutien (7) et la plaque à basse pression (15) pour soutenir le tamis (7), et une rondelle annulaire de glissement (16) disposée entre la plaque à basse pression (15) et la bague filetée (17).

8. Filtre sous pression selon l'une des revendications 1 à 7, caractérisé en ce qu'il comporte au moins un joint annulaire d'étanchéité à basse pression (5') disposé entre la bague de guidage (10) et la monture (8) du tamis, ainsi qu'éventuellement le disque de soutien (9).

9. Filtre sous pression selon l'une des revendications 1 à 8, caractérisé en ce que les manchons (13) d'entrée et de sortie du produit concentré constituent des pièces séparées insérées dans la plaque à haute pression (11) et dont le montage est rendu étanche par rapport à la plaque de guidage de l'écoulement (12) grâce à au moins un joint annulaire à haute pression (4') associé à chaque manchon et monté dans une gorge circulaire radiale (4) de la paroi du manchon.

10. Filtre sous pression selon l'une des revendications 1 à 9, caractérisé en ce que les joints annulaires (1',2',3',4' et 5') sont des joints toriques à base de polymères d'hydrocarbures fluorés.
